# EUROPÄISCHE PATENTSCHRIFT

(11) **EP 0 612 373 B1**
(45) Veröffentlichungstag und Bekanntmachung des Hinweises auf die Patenterteilung: **15.11.1995**
(21) Anmeldenummer: 93918904.9
(22) Anmeldetag: 20.08.1993
(51) Int. Cl.: F02D 41/34, F02P 5/15

(54) **EINRICHTUNG ZUR ERKENNUNG DER STELLUNG WENIGSTENS EINER, EINE REFERENZMARKE AUFWEISENDEN WELLE**
DEVICE FOR IDENTIFYING THE POSITION OF AT LEAST ONE SHAFT HAVING A REFERENCE MARK
DISPOSITIF PERMETTANT D'IDENTIFIER LA POSITION D'AU MOINS UN ARBRE COMPORTANT UN TRAIT DE REPERE

(30) Priorität: 12.09.1992 DE 4230616
(43) Veröffentlichungstag der Anmeldung: 31.08.1994
(73) Patentinhaber: ROBERT BOSCH GMBH, 70442 Stuttgart (DE)
(72) Erfinder: OTT, Karl, D-71706 Markgroeningen (DE); WALTER, Klaus, D-74321 Bietigheim-Bissingen (DE); HEIMES, Joachim, D-71735 Eberdingen (DE); STRATE, Joachim, D-74321 Bietigheim-Bissingen (DE); BOETTCHER, Klaus, D-71735 Eberdingen-Hochdorf (DE)
(86) Internationale Anmeldenummer: DE9300761
(87) Internationale Veröffentlichungsnummer: WO9407014

(56) Entgegenhaltungen:
- EP-A- 0 490 088
- DE-A- 3 908 694
- DE-A- 3 932 072

## Beschreibung

### Stand der Technik

Die Erfindung geht aus von einer Einrichtung zur Erkennung der Stellung wenigstens einer, eine Referenzmarke aufweisenden Welle oder wenigstens einer, eine Referenzmarke aufweisenden, mit der Welle in Verbindung stehenden Geberscheibe nach der Gattung des Hauptanspruchs und ist insbesonders im Zusammenhang mit der Regelung der Einspritzung bei Brennkraftmaschinen einsetzbar. (Vergleiche EP-A-490 088, die eine Kurbelwellen-Positionserkennung mit einem 9-Bit Gray - Code beschreibt sowie eine Schaltung zur Motorstillstandserkennung.)

Bei einer Mehrzylinder-Brennkraftmaschine, bei der in einem Steuergerät berechnet wird, wann und wieviel Kraftstoff pro Zylinder eingespritzt werden soll, muß es gewährleistet sein, daß der Kraftstoff den einzelnen Zylindern zum richtigen Zeitpunkt und in der richtigen Menge zugeführt wird. Damit die Berechnungen in korrekter Weise durchgeführt werden können, muß die jeweilige Stellung der Kurbel- bzw. Nockenwelle der Brennkraftmaschine bekannt sein, es ist daher üblich und wird beispielsweise in der EP-PS 0 017 933 beschrieben, daß die Kurbel- und die Nockenwelle mit je einer Scheibe verbunden sind, auf deren Oberfläche wenigstens eine Bezugsmarke angebracht ist, wobei üblicherweise auf der Kurbelwellenscheibe zusätzlich eine Vielzahl gleichartiger Markierungen, auch Inkremente genannt angebracht sind.

Die beiden sich drehenden Scheiben werden von passenden feststehenden Aufnehmern abgetastet. Aus der zeitlichen Abfolge der von den Aufnehmern gelieferten Impulse läßt sich eine eindeutige Aussage über die Stellung von Kurbel- und Nockenwelle gewinnen und es können im Steuergerät entsprechende Ansteuersignale für die Zündung oder Einspritzung berechnet werden.

Das bekannte System hat den Nachteil, daß erst nach einer gewissen Umdrehung der beiden Wellen eine eindeutige Lageerkennung möglich ist, da für diese Lageerkennung das Vorbeilaufen der Referenzmarken an den jeweiligen Aufnehmern abgewartet werden muß. Damit unmittelbar nach dem Start der Brennkraftmaschine eine korrekte Einspritzung erfolgen kann, sollte die exakte Lage jedoch sofort nach dem Start bekannt sein.

### Vorteile der Erfindung

Die erfindungsgemäße Einrichtung mit den kennzeichnenden Merkmalen des Anspruchs 1 hat den Vorteil, daß unmittelbar nach Einschalten der Brennkraftmaschine die Stellung der Nocken- bzw. der Kurbelwelle im Steuergerät bekannt ist, so daß dieses sofort mit der zylinderrichtigen Zuordnung der Einspritzung beginnen kann.

Ermöglicht wird dies, indem nach dem Abschalten der Zündung und der Einspritzung eine Auslauferkennung stattfindet, wobei die Auslauferkennung nach Abschalten des Zündschlosses beginnt. Während der Nachlaufphase werden vom Steuergerät die von den Aufnehmern gelieferten Signale noch ausgewertet. Diese Auswertung wird erst dann beendet, wenn die Kurbel- bzw. Nockenwelle zum Stillstand gekommen ist.

Die damit mögliche Erkennung der Winkellagen der beiden Wellen beim Stillstand wird in einem nichtflüchtigen Speicher im Steuergerät abgelegt und beim Neustart des Motors für die Berechnungen des Einspritzbeginns herangezogen.

Weitere vorteilhafte Ausgestaltungen der Erfindung sind in den Unteransprüchen angegeben. Dabei ist vorteilhaft, daß bei der Bestimmung der Lage der Welle beim Stillstand die während des normalen Betriebes der Brennkraftmaschine ermittelten Daten mitberücksichtigt werden.

Besonders vorteilhaft ist, daß mit Hilfe der ermittelten Abstellposition und der bei der Synchronisation gefundenen Kurbelwellenstellung nach einem Neustart Korrekturgrößen ermittelt werden können, mit denen das Rückpendeln der Brennkraftmaschine kompensiert werden kann, dabei sind diese Korrekturgrößen vorzugsweise zylinderselektiv adaptierbar.

### Zeichnung

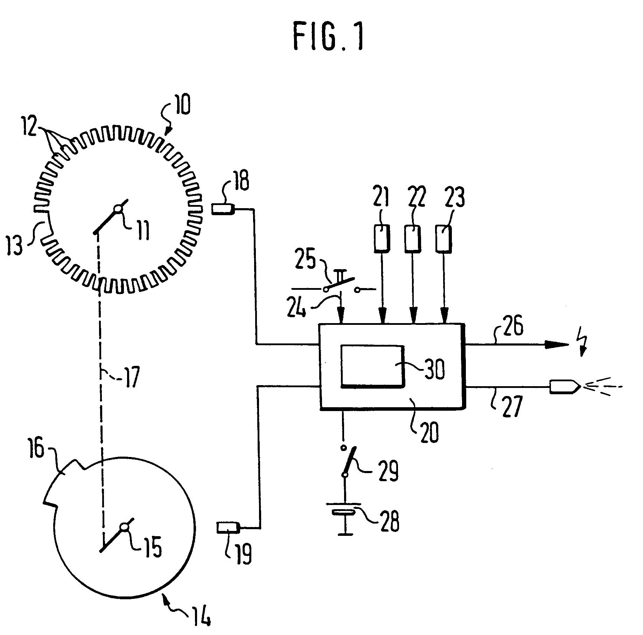

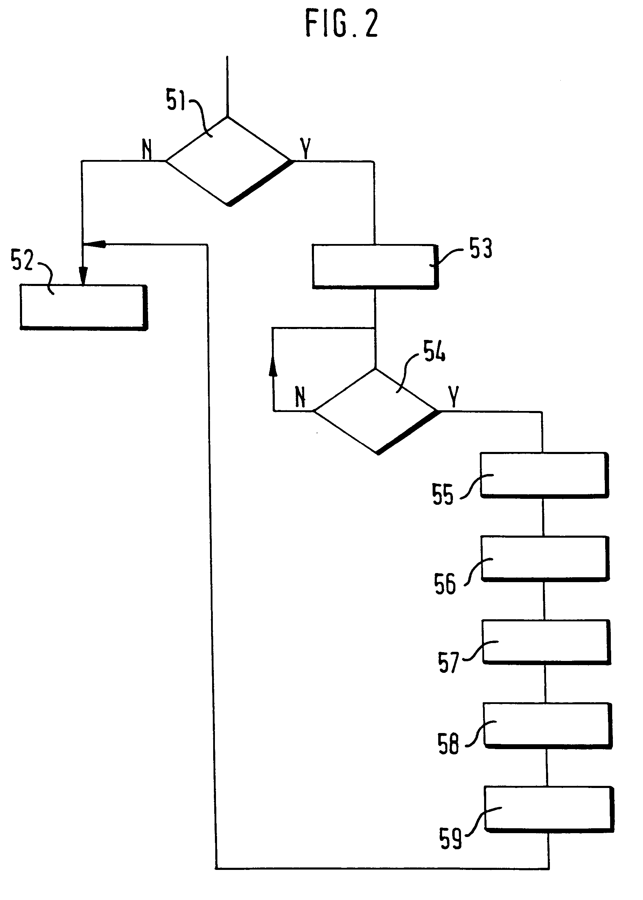

Die Erfindung ist in der Zeichnung dargestellt und wird in der nachfolgenden Bescheibung näher erläutert. Dabei zeigt Figur 1 eine grobe Übersicht über die Anordnung von Kurbel- bzw. Nockenwelle samt den zugehörigen Sensoren und dem Steuergerät, in dem die Berechnungen ablaufen. In Figur 2 ist ein Flußdiagramm aufgezeigt, das den erfindungsgemäßen Ablauf erkennen läßt.

### Beschreibung des Ausführungsbeispiels

In Figur 1 sind die zur Erläuterung der Erfindung erforderlichen Bestandteile einer Brennkraftmaschine beispielhaft dargestellt. Dabei ist mit 10 eine Geberscheibe bezeichnet, die starr mit der Kurbelwelle 11 einer Brennkraftmaschine verbunden ist und an ihrem Umfang eine Vielzahl gleichartiger Winkelmarken 12 aufweist. Neben diesen gleichartigen Winkelmarken 12 ist eine Referenzmarke 13 vorgesehen, die beispielsweise durch zwei fehlende Winkelmarken realisiert ist.

Eine zweite Geberscheibe 14 ist mit der Nockenwelle 15 der Brennkraftmaschine verbunden und weist an ihrem Umfang ein Segment 16 auf, mit dem die Phasenlage der Referenzmarke auf der Kurbelwellenscheibe bestimmt wird. Mit 17 ist die zwischen Kurbel- und Nockenwelle bestehende Verbindung, die die Nockenwelle mit halber Kurbelwellendrehzahl dreht, symbolisiert.

Die dargestellte Form der mit der Kurbel- bzw. der Nockenwelle verbundenen Geberscheiben ist beispielhaft und kann durch wählbare andere Formen ersetzt werden.

Die beiden Geberscheiben 10, 14 werden von Aufnehmern 18, 19, beispielsweise induktiven Aufnehmern oder Hall-Sensoren abgetastet, die beim Vorbeilaufen der Winkelmarken in den Aufnehmern erzeugten Signale werden einem Steuergerät 20 zugeführt und dort in geeigneter Weise aufbereitet, wobei beispielsweise jede Flanke einer Marke einen Impuls ergibt. Diese Impulse bzw. ihre zeitlichen Abfolgen werden im Steuergerät 20 weiterverarbeitet.

Das Steuergerät 20 erhält über verschiedene Eingänge weitere, für die Steuerung bzw. Regelung der Brennkraftmaschine erforderliche Eingangsgrößen, die von verschiedenen Sensoren gemessen werden.Als Beispiele solcher Sensoren seien erwähnt: ein Temperatursensor 21, der die Motortemperatur mißt, ein Drosselklappensensor 22, der die Stellung der Drosselklappe registriert, ein Drucksensor 23, der den Druck im Ansaugrohr oder den Druck in einem Zylinder der Brennkraftmaschine mißt. Weiterhin wird über den Eingang 24 ein "Zündung ein"-Signal zugeführt, das beim Schließen des Zündschalters 25 von der Klemme KL15 des Zündschlosses geliefert wird.

Ausgangsseitig stellt das Steuergerät, das ein nicht dargestelltes Rechen- bzw. Speichermittel sowie einen mit 30 bezeichneten Permanentspeicher umfaßt, Signale für die Zündung und Einspritzung für nicht näher bezeichnete entsprechende Komponenten der Brennkraftmaschine zur Verfügung. Diese Signale werden über die Ausgänge 26 und 27 des Steuergerätes 20 abgegeben.

Je nach Bedarf können weitere Sensoren eingesetzt werden, deren Signale dem Steuergerät zugeführt werden, das Steuergerät 20 kann ebenfalls weitere für die Regelung der Brennkraftmaschine erforderliche Signale abgeben. Es ist auch nicht erforderlich, daß alle dargestellten Sensoren vorhanden sind.

Die Spannungsversorgung des Steuergerätes 20 erfolgt in üblicher Weise mit Hilfe einer Batterie 28, die über ein Schalter 29 während des Betriebs der Brennkraftmaschine sowie während einer Nachlaufphase nach Abstellen des Motors mit dem Steuergerät 20 in Verbindung steht.

Mit der in Figur 1 beschriebenen Einrichtung kann die Stellung der beiden Wellen 11, 15 während des Betriebes der Brennkraftmaschine jederzeit erfaßt werden. Da die Zuordnung zwischen Kurbelwelle und Nockenwelle ebenso bekannt ist wie die Zuordnung zwischen Stellung der Nockenwelle und der Lage der einzelnen Zylinder, kann nach dem Erkennen der Bezugsmarke eine Synchronisation erfolgen und nach einer erfolgten Synchronisation in bekannter Weise die Einspritzung und die Zündung gesteuert bzw. geregelt werden. Eine solche Regelung einer Brennkraftmaschine ist beispielsweise in der DE-OS 39 23 478 beschrieben und wird deshalb hier nicht näher erläutert.

Mit der in Figur 1 beschriebenen Einrichtung ist jedoch auch eine erfindungsgemäße Erkennung der Motorposition im Auslauf während der sogenannten Nachlaufphase möglich. Diese Nachlaufphase, die sich an den üblichen, beispielsweise aus der obengenannte Offenlegungsschrift bekannten Normalbetrieb der Brennkraftmaschine anschließt, soll anhand des Flußdiagramms nach Figur 2 erläutert werden.

Im Steuergerät 20 wird im Schritt S1 geprüft, ob ein Abschaltwunsch des Fahrers vorliegt. Diese Erkennung erfolgt durch Auswertung des über Eingang 24 gelieferten "Zündung ein"-Signals. Besteht kein Abschaltwunsch, läuft der normale Betrieb der Brennkraftmaschine weiter (Schritt S2). Wird dagegen Abschaltwunsch erkannt, werden durch das Steuergerät Zündung und Einspritzung abgeschaltet und in Schritt S3 die Nachlaufphase bearbeitet.

Nach Abschalten der Zündung und der Einspritzung läuft die Brennkraftmaschine bzw. der Motor aus. Das Steuergerät 20 ist noch während einer Nachlaufphase aktiv. Innerhalb dieser Nachlaufphase, die länger ist als die Auslaufphase des Motors, werden Signale, die von den Aufnehmern 18 und 19 geliefert werden, ausgewertet. Es ist daher möglich, während der Auslaufphase die von den Markierungen 12 verursachten Impulse auszuzählen.

Da die Referenzmarke 13 der Geberscheibe 10 jeweils erkannt wird, indem beispielsweise Zeitabstände zwischen einzelnen Impulsen ausgewertet werden, läßt sich durch Auszählen der von den einzelnen Markierungen 12 verursachten Impulse der jeweilige Winkelabstand von der Referenzmarke 13 bestimmen, so daß die exakte Lage der Scheibe 10 und damit der Welle 11 immer bekannt ist. Die Bestimmung der Phasenlage erfolgt über Vergleich Kurbelwellenreferenz und Nockenwellensignal.

Es ist damit auch möglich beim Stillstand der Wellen die genaue Lage der Welle 11 und 15 festzustellen und diese Lage in einem nichtflüchtigen Speicher 30 im Steuergerät abzulegen. Die Erkennung, daß die Welle stillsteht ist mit Schritt S4 bezeichnet, die Abspeicherung der bei Motorstillstand erkannten Lage im nichtflüchtigen Speicher 30 erfolgt im Schritt S5.

Nach Ablauf der Nachlaufphase wird im Schritt S6 das Steuergerät abgeschaltet, es verbleibt in abgeschaltetem Zustand bis ein Neustart des Motors erfolgen soll. Beim Neustart wird wiederum mit Hilfe des Signales "Zündung ein" dieser Neustart vom Steuergerät erkannt und sofort auf die im nichtflüchtigen Speicher 30 abgelegte Information über die Position der Welle 11 oder 15 zurückgegriffen.

Bei einer Brennkraftmaschine kann im Anschluß an den normalen Betrieb, in dem die Stellung der Kurbelund der Nockenwelle sowie ihre Synchronisation bekannt sind und eine Zylindererkennung erfolgt ist, durch die Auswertung der Signale der Aufnehmer bis zum Stillstand der Maschine eine eindeutige Bestimmung der Lage der Kurbel- und Nockenwelle beim Stillstand erfolgen und die Gesamtinformation in einem nichtflüchtigen Speicher abgelegt werden.

Beim Neustart der Brennkraftmaschine werden anhand von diesen abgespeicherten, die Stellung der Maschine angebenden Daten sofort nachdem im Schritt S7 das Startsignal erkannt ist, im Schritt S8 die Einspritzzeiten und der Beginn der Einspritzung bezogen auf die Winkellage berechnet sowie die Einspritzung für den nächsten noch erreichbaren Zylinder ausgegeben, noch bevor eine erneute Synchronisation vorliegt.

Im Schritt S9 erfolgt aus der erneut detektierten Lage der Kurbelwellen- und Nockenwellenreferenzmarke eine Neusynchronisation und es wird wieder auf die normale Berechnung des Einspritzbeginns übergegangen und die ersten Zündimpulse werden vom Steuergerät ausgegeben.

Einspritzbeginn und -dauer während der gesamten Startphase (vor und nach Neusynchronisation) können durch verschiedene Daten appliziert werden.

In einer weiteren Verbesserung wird aus der zeitlichen Abfolge der einzelnen, von den Aufnehmern 18, 19 gelieferten Impulsen die Drehrichtung des Motors erkannt, so daß bei eventuellem Rückpendeln des Motors vor dem Stillstand die Endposition entsprechend korrigiert werden kann.

Ferner kann mit Hilfe der ermittelten Abstellposition und der bei der Synchronisation gefundenen tatsächlichen Kurbelwellenstellung nach dem Neustart Korrekturgrößen ermittelt werden, mit denen der durch das Rückpendeln des Motors verursachte Fehler teilweise kompensiert werden kann. Diese Korrekturgrößen können zylinderselektiv adaptiert werden, und bei jedem Neustart bei den ablaufenden Berechnungen berücksichtigt werden.

Ist eine Drehrichtungserkennung möglich, kann durch Auszählen der von den einzelnen Winkelmarken 12 gelieferten Impulse in der Nachlaufphase laufend eine exakte Motorposition ermittelt werden, so daß auch die abgespeicherte Motorposition exakt ist und beim Neustart sofort die korrekte Lage vorliegt, so daß eine optimale Einspritzung erfolgen kann.

Es ist damit möglich, daß die Einspritzung bereits mit der Betätigung des Anlassers phasenrichtig begonnen werden kann, so daß eine zylinderrichtige Versorgung aller Zylinder mit Kraftstoff unmittelbar nach dem Einschalten möglich ist.

Kann die Drehrichtung beispielsweise infolge eines Fehlers jedoch nicht erkannt werden oder wird beim Abstellen der Motor abgewürgt, d.h. wird der Motor ausgeschaltet ohne daß ein Signal "Zündung ein/aus" geliefert wird, wird die während der Startphase durchgeführte Einspritzung mit Hilfe der abgespeicherten Positionsdaten nicht durchgeführt, sondern es wird dann abgewartet, bis eine Synchronisation erfolgt ist. Die Erkennung solcher Zustände erfolgt über Plausibilitätsprüfungen.

## Patentansprüche

1. Einrichtung zur Erkennung der Stellung wenigstens einer, eine Referenzmarke aufweisenden Welle oder wenigstens einer eine Referenzmarke aufweisenden, mit der Welle in Verbindung stehenden Scheibe, bei einer Brennkraftmaschine, mit wenigstens einem festen Aufnehmer, der ein von der jeweiligen Stellung der Welle abhängiges Sensorsignal liefert, das einer Auswerteeinrichtung, zur Steuerung der Zündung und/oder Einspritzung der Brennkraftmaschine zugeführt wird, wobei nach dem Abschalten der Zündung ein Nachlauf abläuft, während dem die Auswerteeinrichtung das Sensorsignal bis zum Stillstand der Welle auswertet dadurch gekennzeichnet, daß in dem Nachlauf die Stellung der Welle beim Stillstand in einem nichtflüchtigen Speicher abgespeichert wird und beim Wiedereinschalten diese Stellung bei der Steuerung der Einspritzung berücksichtigt wird.

2. Einrichtung nach Anspruch 1, dadurch gekennzeichnet, daß die Auswerteeinrichtung das Steuergerät ist.

3. Einrichtung nach Anspruch 1 oder 2, dadurch gekennzeichnet, daß die wenigstens eine Welle die Kurbel- und/oder Nockenwelle der Brennkraftmaschine ist und jeweils ein zugeordneter Aufnehmer vorhanden ist.

4. Einrichtung nach Anspruch 3, dadurch gekennzeichnet, daß die Kurbel- und die Nockenwelle der Brennkraftmaschine mit Scheiben in Verbindung stehen, wobei die Kurbelwellenscheibe eine Vielzahl von Markierungen und wenigstens eine Referenzmarkierung aufweist und die Nockenwellenscheibe eine Markierung oder mehrere, auf die Zylinderzahl abgestimmte Markierungen aufweist und die Phasenlage über eine definierte Lage der Markierung auf der Nockenwellenscheibe zur Referenzmarkierung der Kurbelwellenscheibe oder über eine eindeutig definierte Folge von Markierungen auf der Nockenwellenscheibe bestimmt wird.

5. Einrichtung nach einem der vorhergehenden Ansprüche, dadurch gekennzeichnet, daß zur genauen Bestimmung der Lage der Kurbelwelle die Zahl der Inkremente nach dem Auftreten der Referenzmarke gezählt wird.

6. Einrichtung nach einem der vorhergehenden Ansprüche, dadurch gekennzeichnet, daß zur genauen Bestimmung der Lage der Nockenwelle die Zahl der Inkremente bezogen auf die Phasenlage ausgezählt wird.

7. Einrichtung nach einem der vorhergehenden Ansprüche, dadurch gekennzeichnet, daß beim Wiedereinschalten nach der Erkennung der Referenzmarken der Kurbel- und/oder Nockenwelle eine Synchronisation durchgeführt wird und auf normale Bestimmung der Einspritzwinkellage übergegangen wird.

8. Einrichtung nach einem der vorhergehenden Ansprüche, dadurch gekennzeichnet, daß eine Drehrichtungserkennung erfolgt.

9. Einrichtung nach Anspruch 7, dadurch gekennzeichnet, daß eine Korrektur der Abstellposition erfolgt, wenn eine Rückdrehung der Brennkraftmaschine nach dem Abstellen der Zündung auftritt und die Korrektur durch Auszählung der Inkremente während des Rücklaufs erfolgt.

10. Einrichtung nach einem der vorhergehenden Ansprüche 1 bis 8, dadurch gekennzeichnet, daß eine Korrektur der Abstellposition erfolgt, wenn eine Rückdrehung der Brennkraftmaschine nach dem Abstellen der Zündung auftritt, wobei die Korrektur durch Vergleich der ermittelten Abstellposition und der bei der Synchronisation gefundenen Kurbelwellenstellung erfolgt.

11. Einrichtung nach Anspruch 10, dadurch gekennzeichnet, daß adaptierbare Korrekturgrößen gebildet werden und die Adaption vorzugsweise zylinderselektiv erfolgt.

## Claims

1. Device for detecting the position of at least one shaft which has a reference mark or at least one disc which has a reference mark and is connected to the shaft, in an internal combustion engine having at least one fixed sensor which supplies a sensor signal which is dependent on the respective position of the shaft and is fed to an evaluation device in order to control the ignition and/or fuel injection of the internal combustion engine, after the ignition is switched off after-running taking place during which the evaluation device evaluates the sensor signal until the shaft comes to a standstill, characterized in that during the after-running the position of the shaft when at a standstill is stored in a non-volatile memory and this position is included in the control of the fuel injection when the engine is switched on again.

2. Device according to Claim 1, characterized in that the evaluation device is the control device.

3. Device according to Claim 1 or 2, characterized in that the at least one shaft is the crankshaft and/or camshaft of the internal combustion engine and in each case an assigned sensor is present.

4. Device according to Claim 3, characterized in that the crankshaft and the camshaft of the internal combustion engine are connected to discs, the crankshaft disc having a plurality of marks and at least one reference mark and the camshaft disc having one mark or a plurality of marks matched to the number of cylinders, and the phase position being determined by means of a defined position of the mark on the camshaft disc with respect to the reference mark of the crankshaft disc or by means of an unambiguously defined sequence of marks on the camshaft disc.

5. Device according to one of the preceding claims, characterized in that, in order to determine exactly the position of the crankshaft, the number of increments after the occurrence of the reference mark is counted.

6. Device according to one of the preceding claims, characterized in that, in order to determine exactly the position of the camshaft, the number of increments is counted out in relation to the phase position.

7. Device according to one of the preceding claims, characterized in that when the engine is switched on again after the detection of the reference marks of the crankshaft and/or of the camshaft, a synchronization is carried out and the system goes over to normal determination of the injection angular position.

8. Device according to one of the preceding claims, characterized in that a detection of the direction of rotation takes place.

9. Device according to Claim 7, characterized in that a correction of the shut-off position takes place if the internal combustion engine turns backwards after the ignition has been shut off and the correction takes place by counting out the increments during the reverse travel.

10. Device according to one of the preceding Claims 1 to 8, characterized in that a correction of the shut-off position takes place if the internal combustion engine turns backwards after the ignition has been shut off, the correction taking place by comparing the determined shut-off position and the crankshaft position found during the synchronization.

11. Device according to Claim 10, characterized in that adaptable correction variables are formed and the adaptation preferably takes place in a cylinder-selective fashion.

## Revendications

1. Dispositif pour identifier la position d'au moins un arbre présentant un trait de repère ou d'au moins un disque présentant un trait de repère et qui se trouve en liaison avec l'arbre, dans le cas d'un moteur à combustion interne, avec au moins un capteur fixe, qui délivre un signal de détection fonction de la position correspondante de l'arbre, signal qui est amené à un système d'exploitation pour commander l'allumage et/ou l'injection du moteur à combustion interne, une marche à vide se déroulant après le débranchement de l'allumage, marche à vide pendant laquelle le système d'exploitation exploite le signal du détecteur jusqu'à l'arrêt de l'arbre, dispositif caractérisé en ce qu'au cours de la marche à vide, on met en mémoire la position de l'arbre lors de l'arrêt dans une mémoire non volatile et on prend en considération lors du réarrangement de l'allumage cette position lors de la commande de l'injection.

2. Dispositif selon la revendication 1, caractérisé en ce que le dispositif d'exploitation est l'appareil de commande.

3. Dispositif selon la revendication 1 ou 2, caractérisé en ce que l'un au moins des arbres est l'arbre de vilebrequin et/ou l'arbre à cames et en ce qu'il y a un capteur associé.

4. Dispositif selon la revendication 3, caractérisé en ce que l'arbre de vilebrequin et l'arbre à cames du moteur à combustion interne sont en liaison avec des disques, le disque de l'arbre de vilebrequin présentant une multiplicité de repères et au moins un repère de référence et l'arbre à cames présente un repère ou plusieurs repères en fonction du nombre de cylindres et en ce que la position de phase est déterminée au moyen d'une position définie du repère sur le disque de l'arbre à cames par rapport au repère de référence du disque de l'arbre de vilebrequin ou au moyen d'une suite définie de façon univoque de repères sur le disque de l'arbre à cames.

5. Dispositif selon l'une des revendications précédentes, caractérisé en ce que l'on compte le nombre des incréments après l'apparition du repère de référence pour déterminer de façon exacte la position de l'arbre de vilebrequin.

6. Dispositif selon l'une de revendications précédentes, caractérisé en ce que l'on compte le nombre des incréments par rapport à la position de phase pour déterminer de façon exacte la position de l'arbre à cames.

7. Dispositif selon l'une des revendications précédentes, caractérisé en ce que lors du réarrangement, on exécute une synchronisation après l'identification des repères de référence de l'arbre de vilebrequin et/ou de l'arbre à cames, et l'on passe à la détermination normale de la position angulaire d'injection.

8. Dispositif selon l'une des revendications précédentes, caractérisé en ce qu'a lieu une identification du sens de rotation.

9. Dispositif selon la revendication 7, caractérisé en ce que l'on effectue une correction de la position de débranchement, quand il se produit une rotation en arrière du moteur à combustion interne après le débranchement de l'allumage et en ce que la correction a lieu en comptant les incréments pendant la marche arrière.

10. Dispositif selon l'une des revendications précédentes 1 à 8, caractérisé en ce que a lieu une correction de la position d'arrêt, quand il se produit une rotation en arrière du moteur à combustion interne après le débranchement de l'allumage, la correction ayant lieu en composant la position d'arrêt identifiée et la position de l'arbre de vilebrequin trouvée lors de la synchronisation.

11. Dispositif selon la revendication 10, caractérisé en ce que l'on constitue des grandeurs de correction adaptables et en ce que l'adaptation a lieu de préférence de façon sélective.
